# EUROPEAN PATENT SPECIFICATION

(11) **EP 3 474 401 B1**
(45) Date of publication and mention of the grant of the patent: **05.05.2021**
(21) Application number: 18199939.2
(22) Date of filing: 11.10.2018
(51) Int. Cl.: H02G 3/06

(54) **DEVICE FOR THE ANGLED CONNECTION OF CABLE TRAYS**
VORRICHTUNG ZUR SCHRÄGEN VERBINDUNG VON KABELRINNEN
DISPOSITIF POUR LE RACCORD ANGULAIRE DE CHEMINS DE CÂBLES

(30) Priority: 17.10.2017 ES 201731233 U
(43) Date of publication of application: 24.04.2019
(73) Proprietor: Unex Aparellaje Electrico S.L., 08903 L'Hospitalet de Llobregat (Barcelona) (ES)
(72) Inventor: MOSTAZO OVIEDO, José Antonio, 08903 L'Hospitalet de Llobregat (ES)
(74) Representative: Curell Suñol S.L.P.

(56) References cited:
- EP-A1- 0 112 753
- EP-A1- 0 463 281
- EP-A1- 1 530 273
- EP-A1- 2 551 973
- ES-A6- 2 008 444
- FR-A1- 2 437 720
- GB-A- 415 250
- US-A- 5 529 273
- US-A1- 2009 148 227
- US-A1- 2013 161 944

## Description

### Field of the Invention

The invention is comprised in the field of cable trays that are normally used for guiding electric cables, optical fiber cables, or cables of another type going through a space.

The invention relates to a device for the angled connection of cable trays, of the type comprising a first monoblock rigid part made of a polymeric material and a second monoblock rigid part made of a polymeric material, each of said first and second parts having a fitting end for fitting with a corresponding end of a cable tray, and an attachment end, opposite said fitting end, for attaching said first part to said second part, each of said fitting ends comprising a planar portion extending along a longitudinal axis, said planar portions being coplanar when said first and second parts are attached to one another by their attachment ends, and said attachment ends being shaped for being attached to one another such that said first and second parts can rotate one with respect to the other about an axis of rotation perpendicular to the plane of said planar portions, between an aligned position in which said longitudinal axes are aligned and at least an angled position in which said longitudinal axes form an angle.

### State of the Art

In known devices of the type indicated above, the two monoblock rigid parts made of a polymeric material are attached to one another by means of a screw and a nut, such that said screw forms the axis of rotation. For the angled connection of two cable trays, first the two rigid parts are connected by placing the screw and the nut and tightening them so as to fix said angled position with the desired angle, and then the fitting ends are placed at the corresponding ends of the cable trays. This method is relatively complicated.

FR2437720A1 discloses a device for the angled connection of cable trays in which the two rigid parts are connected by a screw and a nut which are not part of said rigid parts.

### Description of the Invention

The purpose of the invention is to provide a device for the angled connection of cable trays of the type indicated above, which allows more readily connecting two cable trays with a variable angle between such trays, without increasing the cost of manufacturing said device.

This purpose is achieved by means of a device for the angled connection of cable trays according to claim 1.

As will be seen in greater detail below in the explanation of the embodiments, this configuration according to the invention allows attaching the two rigid parts and subsequently establishing the angled connection of two cable trays, without needing to use additional parts such as nuts and screws, so the device is much easier to use than in the prior art. Furthermore, by dispensing with additional parts such as screws and nuts, and given that the particular shape of the rigid parts which allows them to be attached to one another can be effortlessly obtained from a mold, the device according to the invention has a lower cost than the prior art does.

In some embodiments, the attachment end of the first part has a circular cavity from the center of which the lug extends, and the attachment end of the second part has a circular projection in which the opening is formed, the circular projection being shaped such that it fits in the circular cavity when the first and second parts are attached to one another. This configuration provides a sturdier articulation between the two parts, and it also makes the operation of attaching said parts by means of fitting the two attachment ends to one another easier.

Preferably, in order for the retention to be sturdier, the lug comprises at least two of the retaining flanges. More preferably, the two retaining flanges are arranged opposite one another with respect to the axis of rotation. The flanges thereby apply symmetrical supporting forces with respect to the axis, which makes it easier to rotate the two parts.

Preferably, one of the attachment end of the first part and of the attachment end of the second part comprises holes arranged in different angular positions around the axis of rotation, and the other one of them comprises a peg arranged such that it is introduced into each of the holes for different values of the angle formed by the longitudinal axes. As a result, the user can easily adjust the angle formed by the two parts according to predetermined values set by the angular positions of the holes.

Preferably, one of the attachment end of the first part and of the attachment end of the second part comprises angle marks around the axis of rotation, and the other one comprises a reference mark arranged facing the angle marks. These marks make it easier for the user to set the angle formed by the two parts.

In several advantageous embodiments, the lug comprises an elastically flexible portion in which the retaining flange is arranged, said elastically flexible portion being sized such that in the aligned position, the lug with the retaining flange only goes through the opening when the elastically flexible portion is bent, so the two rigid parts are attached to one another in the aligned position by crimping.

Preferably, the elastically deformable portion is formed by two facing arms forming a fork, each of said two arms comprising one of the retaining flanges and being elastically flexible to move one closer to another and to allow the lug with the two retaining flanges to go through said opening. This configuration makes the operation of attaching the two parts together by crimping easier, and it also makes the reverse operation of separating the two parts, where needed, easier. In particular, to separate the two parts, where needed, the user can hold the lug by the flanges and move them closer to one another to thus bend the two arms.

Preferably, in order to make the operation of attaching the two parts by crimping even easier, the two retaining flanges have a beveled end. When one part is pushed against the other part in the axial direction, the beveled surface of the ends of the flanges is supported against the contour of the general opening. Attaching the two parts by crimping will be done by simply pushing one part against the other part in the axial direction.

In some possible embodiments, each of the fitting ends of the first and second parts comprises two wings extending from a face of the planar portion, respectively along each of the two longitudinal sides of the planar portion, and at least one of the two wings is provided with an elongated hole extending in the direction of the longitudinal axis. One of these wings is supported on the bottom wall of the cable tray, whereas the other one is supported on a corresponding wing of the side wall of said cable tray. The planar portion is supported on said side wall of the cable tray. The elongated hole allows fixing the fitting end to the cable tray by means of a screw and nut assembly.

In other possible embodiments, each of the fitting ends consists of the planar portion, which is free of wings, and the planar portion is provided with an elongated hole extending in the direction of the longitudinal axis. In this case, the fitting end is supported only by the planar portion in the side wall of the cable tray, and the elongated hole allows fixing the fitting end to the cable tray by means of a screw and nut assembly.

The invention also comprises other detail-related features illustrated in the following detailed description of an embodiment of the invention and in the attached drawings.

### Brief Description of the Drawings

The advantages and features of the invention will be understood based on the following description in which preferred embodiments of the invention are described in reference to the drawings with a non-limiting character with respect to the scope of the main claim.
Figure 1 is a perspective view of the angled assembly of devices according to the invention in a cable tray.
Figure 2 is a perspective view of two cable trays connected at an angle by means of devices according to the invention.
Figure 3 is a perspective view of the device in the aligned position according to a first embodiment.
Figures 4 and 5 are, respectively, a front and rear perspective view of the device of Figure 3 in a position in which the longitudinal axes form an angle.
Figure 6 is a detail view of Figure 5 showing the area of attachment between the parts.
Figures 7 and 8 are, respectively, a front and rear perspective view of the first part of the device of Figure 3.
Figures 9 and 10 are, respectively, a front and rear perspective view of the second part of the device of Figure 3.
Figures 11 and 12 are, respectively, a detail view of the attachment end of the first part and the second part of the device of Figure 3.
Figure 13 is a detail perspective view of the first part of another possible embodiment in which the lug has a different shape.
Figure 14 is a perspective view of a device according to another possible embodiment in which the fitting ends are free of wings.

### Detailed Description of several Embodiments of the Invention

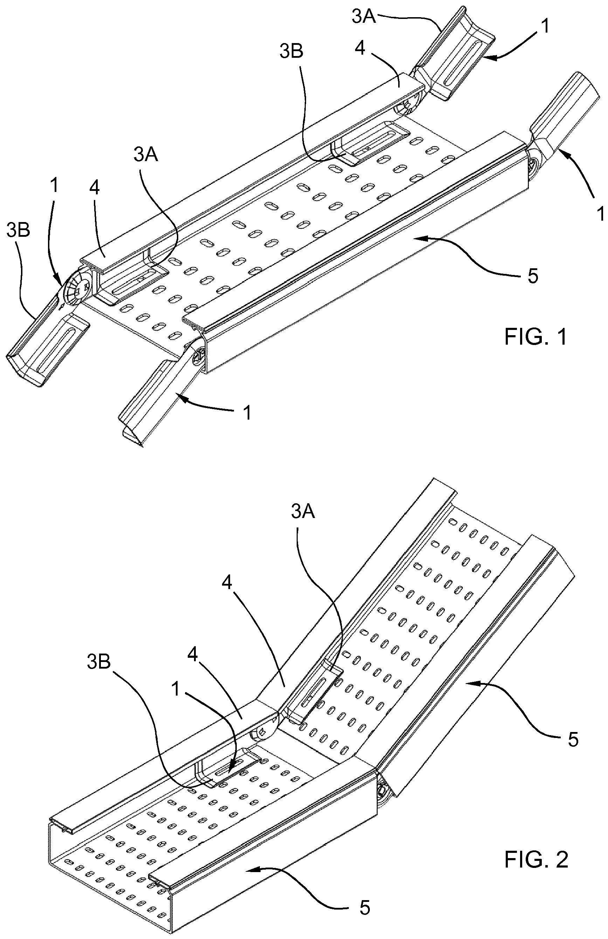

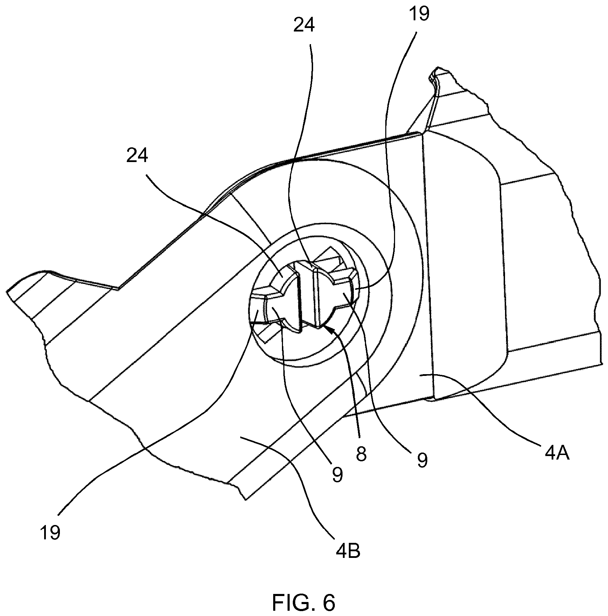

In a first embodiment shown in Figures 1 to 12, the device 1 for the angled connection of cable trays comprises a first part 2A and a second part 2B that are attached to one another in order to connect the cable trays 5 at a desired angle. Each of the two parts 2A, 2B is a molded monoblock rigid part made of a polymeric material. The polymeric material can be the same for both parts 2A, 2B, or it can be different for each of them. It is preferably a thermoplastic such as PVC, polycarbonate, or polypropylene. It can also be a heat-setting resin, such as glass fiber-reinforced polyester. Preferably, the polymeric material is an electrical insulating material with a surface resistivity exceeding 100 MΩ (surface resistivity measured according to standard EN 62631-3-2:2016).

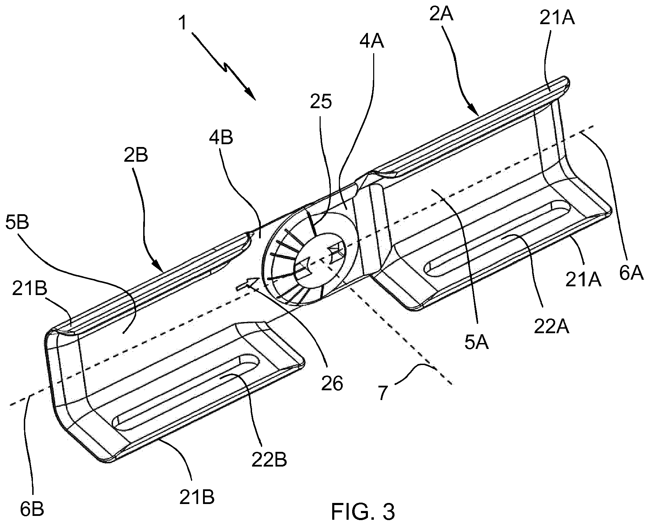

As can be seen in Figures 3, 4, and 5, both parts 2A, 2B have a fitting end 3A, 3B for fitting with a corresponding end 4 of a cable tray 5, and an attachment end 4A, 4B, opposite the fitting end 3A, 3B, for attaching the first part 2A to the second part 2B.

The fitting ends 3A, 3B have a planar portion 5A, 5B extending along a longitudinal axis 6A, 6B, the planar portions 5A, 5B being coplanar when the parts 2A, 2B are attached to one another by their attachment ends 4A, 4B, as depicted in Figures 3, 4, and 5. Furthermore, each of the fitting ends 3A, 3B comprises two wings 21A, 21B extending from a face of the planar portion 5A, 5B, respectively along each of the two longitudinal sides of said planar portion 5A, 5B. In the depicted embodiment, one of the two wings is taller than the other one. The tallest wing is provided with an elongated hole 22A, 22B extending in the direction of the longitudinal axis 6A, 6B.

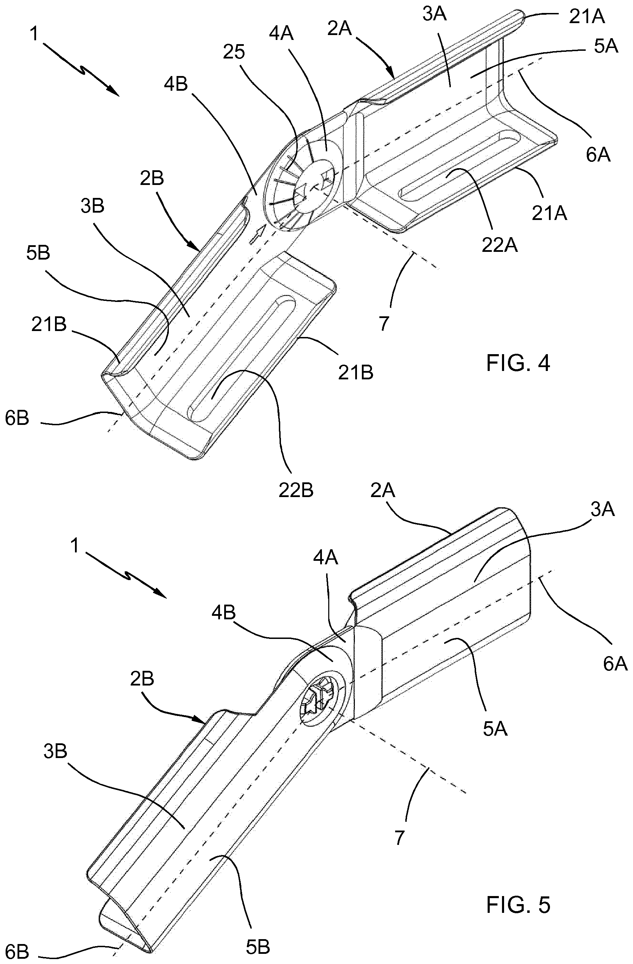

The attachment ends 4A, 4B are shaped for being attached to one another such that the first and second parts 2A, 2B can rotate one with respect to the other about an axis of rotation 7 perpendicular to the plane of the planar portions 5A, 5B, between an aligned position, like the position shown in Figure 3 in which the longitudinal axes 6A, 6B are aligned, and at least an angled position, like the position shown in Figures 3 and 4 in which the longitudinal axes 6A, 6B form an angle.

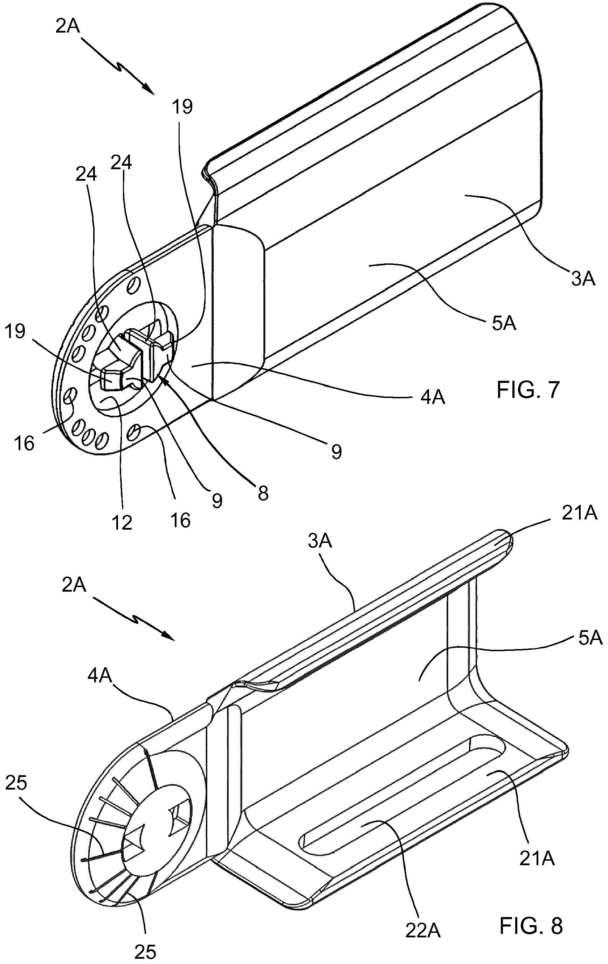

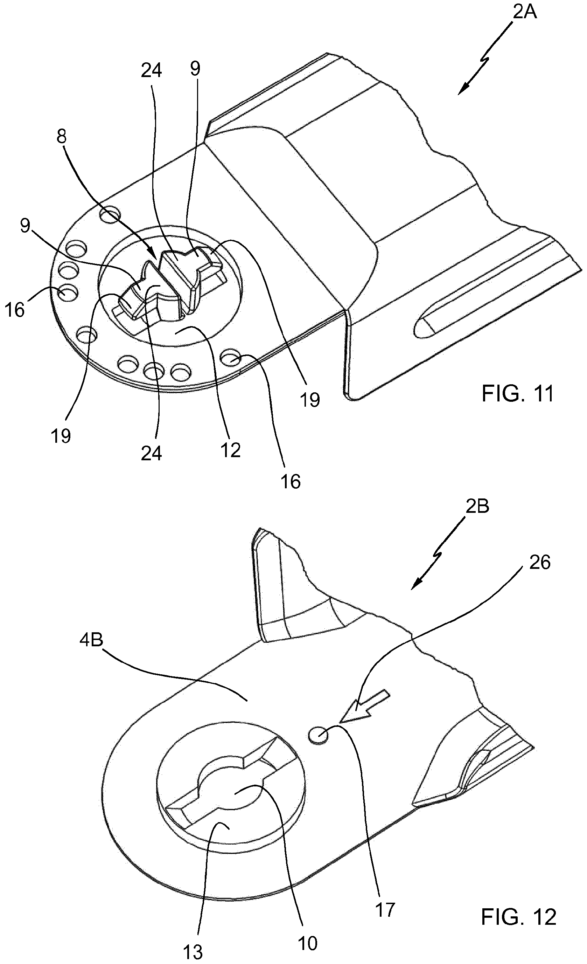

As shown in Figures 7 and 11, the attachment end 4A of the first part 2A has a circular cavity 12 from the center of which a lug 8 extends in an axial direction, coaxial with the axis of rotation 7. The lug 8 is formed by two facing arms 24 forming a fork. Each arm 24 has a retaining flange 9 having a beveled end 19. These retaining flanges 9 are arranged opposite one another with respect to the axis of rotation 7, and extend laterally with respect to the axial direction. The two arms 24 are elastically flexible such that they may experience bending, moving closer to one another to allow the lug 8 with its two retaining flanges 9 to go through the opening 10 (described below) of the second part 2B.

The attachment end 4A of the first part 2A has holes 16 arranged in different angular positions around the axis of rotation 7. These holes 16 are arranged on the face of the attachment end 4A that is opposite the attachment end 4B of the second part 2B. In the depicted embodiment, the holes 16 are blind holes. As shown in Figures 3, 4, and 8, the attachment end 4A also has angle marks 25 around the same axis of rotation 7, arranged on the face of the attachment end opposite the face that is opposite the attachment end 4B of the second part 2B.

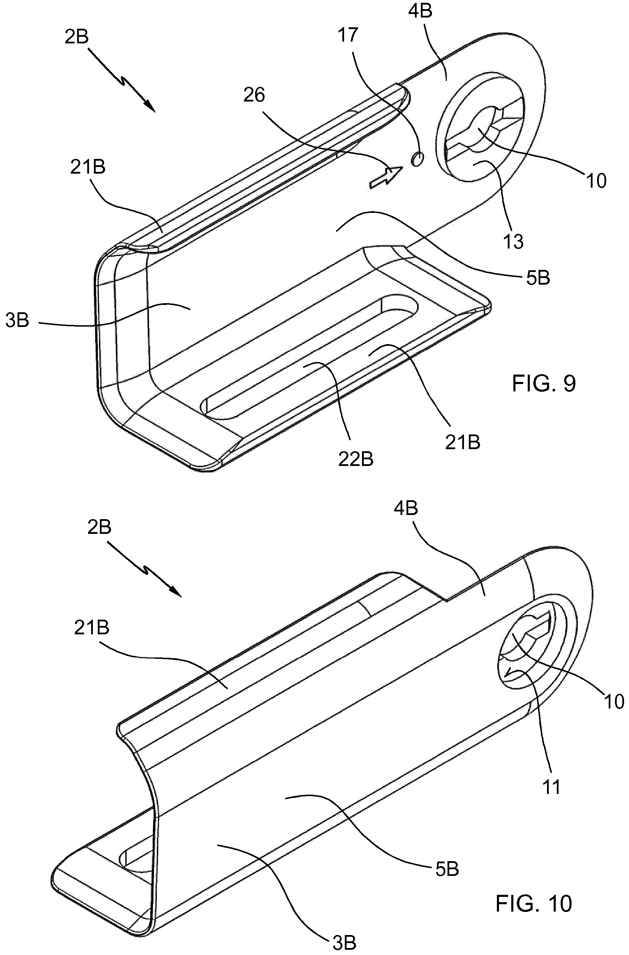

As shown in Figures 9, 10, and 12, the attachment end 4B of the second part 2B has a circular projection 13 shaped such that it fits in the circular cavity 12 when the first and second parts 2A, 2B are attached to one another by their attachment ends 4A, 4B. An opening 10 is formed in said circular projection 13, where the cross-section shape of said opening 10 corresponds to the cross-section shape of the lug 8 with the retaining flanges 9. In the extension direction of the retaining flanges 9, the width of the opening 10 is slightly smaller than the width of the lug 8 with the two retaining flanges 9, so the two attachment ends 4A, 4B are coupled together by crimping as a result of the elastic bending of the arms 24, as will be described below.

Once the circular projection 13 has been fitted in the circular cavity 12, it provides a larger shearing section of the articulation and therefore greater mechanical strength. As a result, the lug 8 can be less strong, which makes it easier to design it with the two arms 24 being elastically flexible.

Furthermore, the attachment end 4B of the second part 2B has a retaining surface 11 cooperating with the retaining flanges 9. As can be seen in Figure 10, the retaining surface 11 is a planar surface surrounding the opening 10 on one face of the attachment end 4B opposite the face thereof facing the attachment end 4A of the first part 2A. A reference mark 26 and a short peg 17 are formed on this latter face, opposite the retaining surface 11. When the two parts 2A, 2B are attached to one another by their attachment ends 4A, 4B, the peg 17 is slightly introduced into one of the holes 16, and the reference mark 26 is arranged facing the angle marks 25.

In order to attach the first and second parts 2A, 2B at an angle by their attachment ends 4A, 4B, the longitudinal axes 6A, 6B thereof must first be aligned. In this aligned position shown in Figure 3, when the first part 2A is moved towards the second part 2B in the axial direction, the opening 10 allows the passage of the lug 8 with the retaining flanges 9. In order for the lug 8 with the retaining flanges 9 to be able to go through the opening 10, the two arms 24 experience elastic bending that reduces the width of said lug 8. This is achieved as a result of the fact that when the lug 8 snaps through the opening 10, the beveled ends 19 of the retaining flanges 9 are supported axially on the edge of said opening 10 and transmit a lateral push, which makes the arms 24 experience elastic bending and move closer to one another. When the lug 8 and the retaining flanges 9 have already gone through the opening 10, the arms 24 of the lug 8 are separated again to their initial position, thereby preventing the lug 8 with the retaining flanges 9 from being able to come out through the opening 10. Therefore, in the aligned position the two attachment ends 4A, 4B are coupled together by crimping as a result of the elastic bending of the arms 24.

One of the two parts 2A, 2B is then rotated with respect to the other one around the axis of rotation 7 to transition to a predetermined angled position in which the peg 17 is slightly introduced into one of the holes 16. Transitioning from an angled position to another position can be readily achieved by making the parts 2A, 2B rotate about the axis 7. In this movement, the peg 17 readily jumps from one hole 16 to another because said peg 17 is only slightly introduced into the holes 16, such that it may come out of them by slight elastic deformation of any of the attachment ends 4A, 4B. The holes 16 and the peg 17 therefore allow obtaining different predetermined values of the angle formed by the longitudinal axes 6A, 6B. The angle marks 25 and the reference mark 26 serve for the assembly operator to readily identify the different values of the angle. Each angle mark 25 preferably corresponds to an angle determined by a hole 16 formed by the longitudinal axes 6A, 6B.

When the first and second parts 2A, 2B are not in the aligned position, i.e., when they are between said aligned position and any of the angled positions, the relative position of the two parts 2A, 2B in the axial direction is fixed, the planar portions 5A, 5B being coplanar, and separation of the two parts 2A, 2B therefore being impossible, because the attachment ends 4A, 4B are supported against one another, preventing the relative movement between the first and second parts 2A, 2B in the axial direction in one direction of moving said parts 2A, 2B closer together, while at the same time the retaining flanges 9 are supported against the retaining surface 11 preventing the relative movement in the opposite direction.

Finally, to assemble the device 1 in the cable trays 5, the fitting ends 3A, 3B of the device 1 fit in the corresponding ends 4 of the cable trays 5, such that the wing having a shorter height is fitted with a corresponding wing of the side wall of the cable tray 5, and the wing having the greatest height is supported against the bottom wall of the cable tray 5. The operator can then fix the device 1 to the cable trays 5 by installing a lock screw (not depicted) in the elongated holes 22A, 22B.

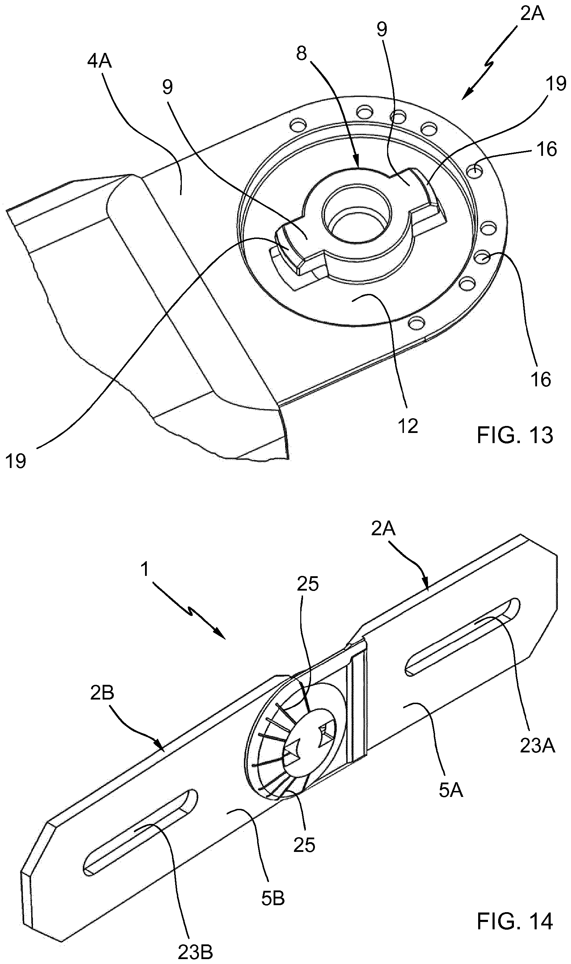

Figure 13 shows another possible embodiment. The only difference with respect to the first embodiment explained above is the configuration of the lug 8 with the retaining flanges 9. In this other embodiment, the lug 8 has the shape of a cylindrical block with two facing retaining flanges 9 and has dimensions slightly smaller than the dimensions of the opening 10, such that in the aligned position of the two parts 2A, 2B, the lug 8 with the retaining flanges 9 can freely pass through the opening 10. In this case, the two attachment ends 4A, 4B are not coupled together by crimping, but rather they can be attached and separated freely when the two parts 2A, 2B are in the aligned position. It will be observed that it is only possible to separate the two parts 2A, 2B when they are in the aligned position.

Figure 14 shows another embodiment that only differs from the first embodiment in the shape of the fitting ends 3A, 3B of the two parts 2A, 2B. In this case, each of the fitting ends 3A, 3B consists of the planar portion 5A, 5B free of wings, intended for being supported against the side wall of a cable tray. To make installation easier, it is envisaged that the planar base 5A, 5B is provided with an elongated hole 23A, 23B, extending in the direction of the longitudinal axis 6A, 6B, for the passage of lock screws (not depicted).

## Claims

1. A device (1) for the angled connection of cable trays, comprising a first monoblock rigid part (2A) made of a polymeric material and a second monoblock rigid part (2B) made of a polymeric material, each of said first and second parts (2A, 2B) having a fitting end (3A, 3B) for fitting with a corresponding end (4) of a cable tray (5), and an attachment end (4A, 4B), opposite said fitting end (3A, 3B), for attaching said first part (2A) to said second part (2B), each of said fitting ends (3A, 3B) comprising a planar portion (5A, 5B) extending along a longitudinal axis (6A, 6B), said planar portions (5A, 5B) being coplanar when said first and second parts (2A, 2B) are attached to one another by their attachment ends (4A, 4B), and said attachment ends (4A, 4B) being shaped for being attached to one another such that said first and second parts (2A, 2B) can rotate one with respect to the other about an axis of rotation (7) perpendicular to the plane of said planar portions (5A, 5B), between an aligned position in which said longitudinal axes (6A, 6B) are aligned and at least an angled position in which said longitudinal axes (6A, 6B) form an angle, wherein said attachment end (4A) of said first part (2A) comprises a lug (8) extending in an axial direction, coaxial with said axis of rotation (7), said lug (8) comprising at least a retaining flange (9) extending laterally with respect to said axial direction; and said attachment end (4B) of said second part (2B) comprises an opening (10) and a retaining surface (11) cooperating with said retaining flange (9), said opening (10) being shaped such that:
- when said first and second parts (2A, 2B) are in said aligned position, said opening (10) allows the passage of said lug (8) with said retaining flange (9) when said first part (2A) is moved towards said second part (2B) in said axial direction;
- and between said aligned position and said angled position, when said first and second parts (2A, 2B) are not in said aligned position, said attachment ends (4A, 4B) are supported against one another, preventing the relative movement between said first and second parts (2A, 2B) in said axial direction in one direction, while at the same time said retaining flange (9) is supported against said retaining surface (11) preventing said relative movement in an opposite direction, so that said two parts (2A, 2B) cannot be separated.

2. The device (1) according to claim 1, **characterized in that** said attachment end (4A) of said first part (2A) has a circular cavity (12) from the center of which said lug (8) extends, and said attachment end (4B) of said second part (2B) has a circular projection (13) in which said opening (10) is formed, said circular projection (13) being shaped such that it fits in said circular cavity (12) when said first and second parts (2A, 2B) are attached to one another.

3. The device (1) according to any one of claims 1 or 2, **characterized in that** said lug (8) comprises at least two of said retaining flanges (9).

4. The device according to claim 3, **characterized in that** said at least two retaining flanges (9) are arranged opposite one another with respect to said axis of rotation (7).

5. The device according to any one of claims 1 to 4, **characterized in that** one of said attachment end (4A) of said first part (2A) and of said attachment end (4B) of said second part (2B) comprises holes (16) arranged in different angular positions around said axis of rotation (7), and the other one of them comprises a peg (17) arranged such that it is introduced into each of said holes (16) for different values of the angle formed by said longitudinal axes (6A, 6B).

6. The device (1) according to any one of claims 1 to 5, **characterized in that** one of said attachment end (4A) of said first part (2A) and of said attachment end (4B) of said second part (2B) comprises angle marks (25) around said axis of rotation (7), and the other one comprises a reference mark (26) arranged facing said angle marks (25).

7. The device (1) according to any one of claims 1 to 6, **characterized in that** said lug (8) comprises an elastically flexible portion in which said retaining flange (9) is arranged, said elastically flexible portion being sized such that in said aligned position, said lug (8) with said retaining flange (9) only goes through said opening (10) when said elastically flexible portion is bent.

8. The device (1) according to claim 7, **characterized in that** said elastically deformable portion is formed by two facing arms (24) forming a fork, each of said two arms (24) comprising one of said retaining flanges (9) and being elastically flexible to move one closer to another and to allow said lug (8) with the two retaining flanges (9) to go through said opening (10).

9. The device (1) according to claim 8, **characterized in that** said two retaining flanges (9) have a beveled end (19).

10. The device (1) according to any one of claims 1 to 9, **characterized in that** each of said fitting ends (3A, 3B) of said first and second parts (2A, 2B) comprises two wings (21A, 21B) extending from a face of said planar portion (5A, 5B), respectively along each of the two longitudinal sides of said planar portion (5A, 5B), and at least one of said two wings (21A, 21B) is provided with an elongated hole (22A, 22B) extending in the direction of said longitudinal axis (6A, 6B).

11. The device (1) according to any one of claims 1 to 8, **characterized in that** each of said fitting ends (3A, 3B) consists of said planar portion (5A, 5B), which is free of wings, and said planar portion (5A, 5B) is provided with an elongated hole (23A, 23B) extending in the direction of said longitudinal axis (6A, 6B).

## Patentansprüche

1. Eine Vorrichtung (1) für das abgewinkelte Verbinden von Kabelträgern, umfassend ein erstes, starres Monoblock-Teil (2A), hergestellt aus einem Polymermaterial, und ein zweites starres Monoblock-Teil (2B), hergestellt aus einem Polymermaterial, wobei jedes der ersten und zweiten Teile (2A, 2B) ein Einpassende (3A, 3B) zum Einpassen in ein entsprechendes Ende (4) eines Kabellträgers (5) und ein Verbindungsende (4A, 4B), welches dem Einpassende (3A, 3B) gegenüberliegt, zum Verbindung des ersten Teiles (2A) an dem zweiten Teil (2B) aufweist, wobei jedes der Einpassenden (3A, 3B) einen sich entlang einer Längsachse (6A, 6B) erstreckenden planaren Abschnitt (5A, 5B) aufweist, wobei die planaren Abschnitte (5A, 5B) koplanar sind, wenn das erste und das zweite Teil (2A, 2B) durch ihre Verbindungsenden (4A, 4B) aneinander verbunden sind, und die Verbindungsenden (4A, 4B) so geformt sind, dass sie aneinander verbunden sind , sodass das erste und das zweite Teil (2A, 2B), in Bezug zu dem jeweils anderen, um eine Drehachse (7) senkrecht zu der Ebene der planaren Abschnitte (5A, 5B) drehen können, zwischen einer ausgerichteten Position, in der die Längsachsen (6A, 6B) ausgerichtet sind und mindestens einer abgewinkelten Position, in der die Längsachsen (6A, 6B) einen Winkel bilden,
wobei das Verbindungsende (4A) des zweiten Teiles (2A) einen Zapfen (8) aufweist, die sich in axialer Richtung koaxial zur Drehachse (7) erstreckt, wobei der Zapfen (8) mindestens eine Haltelasche (9) aufweist, der sich seitlich in Bezug zu der axialen Richtung erstreckt; und das Verbindungsende (4B) des zweiten Teiles (2B) eine Öffnung (10) und eine Haltefläche (11) aufweist, die mit der Haltelasche (9) zusammenwirkt, wobei die Öffnung (10) so geformt ist, dass:
- wenn die ersten und zweiten Teile (2A, 2B) in der ausgerichteten Position sind, die Öffnung (10) den Durchgang des Zapfens (8) mit der Haltelasche (9) ermöglicht, wenn das erste Teil (2A) in Richtung des zweiten Teils (2B) in der axialen Richtung bewegt wird;
- und zwischen der ausgerichteten Position und der abgewinkelten Position, wenn das erste und das zweite Teil (2A, 2B) nicht in der ausgerichteten Position sind, die Verbindungsenden (4A, 4B) gegeneinander abgestützt sind, wodurch die Relativbewegung zwischen dem ersten und dem zweiten Teil (2A, 2B) in der axialen Richtung in einer Richtung verhindert wird, während gleichzeitig die Haltelasche (9) gegen die Haltefläche (11) abgestützt wird, wodurch die Relativbewegung in einer entgegengesetzten Richtung verhindert wird, sodass die beiden Teile (2A, 2B) nicht getrennt werden können.

2. Die Vorrichtung (1) nach Anspruch 1, **dadurch gekennzeichnet, dass** das Verbindungsende (4A) des ersten Teiles (2A) eine kreisförmige Vertiefung (12) aufweist, von dessen Mitte aus sich der Zapfen (8) erstreckt, und das Verbindungsende (4B) des zweiten Teiles (2B) einen kreisförmigen Vorsprung (13) aufweist, in welchem die Öffnung (10) ausgebildet ist, wobei der kreisförmige Vorsprung (13) so geformt ist, dass dieser in die kreisförmige Vertiefung (12) passt, wenn die ersten und zweiten Teile (2A, 2B) aneinander verbunden sind.

3. Die Vorrichtung (1) nach einem der Ansprüche 1 oder 2, **dadurch gekennzeichnet, dass** der Zapfen (8) zumindest zwei der genannten Haltelaschen (9) aufweist.

4. Die Vorrichtung nach Anspruch 3, **dadurch gekennzeichnet, dass** die mindestens zwei Haltelaschen (9) in Bezug auf die Drehachse (7) einander gegenüberliegend angeordnet sind.

5. Die Vorrichtung nach einem der Ansprüche 1 bis 4, **dadurch gekennzeichnet, dass** eines der Verbindungsenden (4A) des ersten Teiles (2A) und des Verbindungsendes (4B) des zweiten Teiles (2B) Löcher (16) aufweist, die in verschiedenen Winkelpositionen um die Drehachse (7) herum angeordnet sind, und das andere von ihnen einen Stift (17) aufweist, der so angeordnet ist, dass er in jedes der Löcher (16) für verschiedene Werte des durch die Längsachsen (6A, 6B) gebildeten Winkels eingeführt wird.

6. Die Vorrichtung (1) nach einem der Ansprüche 1 bis 5, **dadurch gekennzeichnet, dass** eines der Verbindungsenden (4A) des ersten Teiles (2A) und des Verbindungsendes (4B) des zweiten Teiles (2B) Winkelmarkierungen (25) um die Drehachse (7) herum aufweist, und der andere eine Referenzmarkierung (26) aufweist, die den Winkelmarkierungen (25) zugewandt angeordnet ist.

7. Die Vorrichtung (1) nach einem der Ansprüche 1 bis 6, **dadurch gekennzeichnet, dass** der Zapfen (8) einen elastisch biegsamen Abschnitt aufweist, an welchem die Haltelasche (9) angeordnet ist, wobei der elastisch biegsame Abschnitt so bemessen ist, dass in der ausgerichteten Position der Zapfen (8) mit der Haltelasche (9) nur durch die Öffnung (10) hindurchgeht, wenn der elastisch biegsame Abschnitt gebogen ist.

8. Die Vorrichtung (1) nach Anspruch 7, **dadurch gekennzeichnet, dass** der elastisch verformbare Abschnitt aus zwei einander zugewandten Armen (24) gebildet ist, welche eine Gabel ausbilden, wobei jeder der beiden Arme (24) eine der Haltelasche (9) aufweist und elastisch biegsam ist, um näher aufeinander zu bewegen, und um zu ermöglichen, dass der Zapfen (8) mit den zwei Haltelaschen (9) durch die Öffnung (10) hindurchgeht.

9. Die Vorrichtung (1) nach Anspruch 8, **dadurch gekennzeichnet, dass** die zwei Haltelaschen (9) ein abgeschrägtes Ende (19) haben.

10. Die Vorrichtung (1) nach einem der Ansprüche 1 bis 9, **dadurch gekennzeichnet, dass** jedes der Einpassenden (3A, 3B) des ersten und zweiten Teiles (2A, 2B) zwei Flügel (21A, 21B) aufweist, die sich von einer Fläche des planaren Abschnitts (5A, 5B) jeweils entlang jeder der beiden Längsseiten des planaren Abschnitts (5A, 5B) erstrecken, und mindestens einer der beiden Flügel (21A, 21B) mit einem Langloch (22A, 22B) versehen ist, das sich in Richtung der Längsachse (6A, 6B) erstreckt.

11. Die Vorrichtung (1) nach einem der Ansprüche 1 bis 8, **dadurch gekennzeichnet, dass** jedes der Einpassenden (3A, 3B) aus dem planaren Abschnitt (5A, 5B) besteht, der frei von Flügeln ist, und der planare Abschnitt (5A, 5B) mit einem Langloch (23A, 23B) versehen ist, das sich in Richtung der Längsachse (6A, 6B) erstreckt.

## Revendications

1. Dispositif (1) pour le raccordement angulaire de chemins de câbles, comprenant une première partie rigide monobloc (2A) réalisée avec un matériau polymère et une seconde partie rigide monobloc (2B) réalisée avec un matériau polymère, chacune desdites première et seconde parties (2A, 2B) ayant une extrémité d'ajustement (3A, 3B) pour ajustement avec une extrémité (4) correspondante d'un chemin de câbles (5), et une extrémité de jonction (4A, 4B) opposée à ladite extrémité d'ajustement (3A, 3B) pour joindre ladite première partie (2A) à ladite seconde partie (2B), chacune desdites extrémités d'ajustement (3A, 3B) comprenant une partie planaire (5A, 5B) s'étendant le long d'un axe longitudinal (6A, 6B), lesdites parties planaires (5A, 5B) étant coplanaires lorsque lesdites première et seconde parties (2A, 2B) sont jointes entre elles par leurs extrémités de jonction (4A, 4B), et lesdites extrémités de jonction (4A, 4B) étant formées pour être jointes entre elles de sorte que lesdites première et seconde parties (2A, 2B) peuvent tourner l'une par rapport à l'autre autour d'un axe de rotation (7) perpendiculaire au plan desdites parties planaires (5A, 5B), entre une position alignée dans laquelle lesdits axes longitudinaux (6A, 6B) sont alignés et au moins une position angulaire dans laquelle lesdits axes longitudinaux (6A, 6B) forment un angle,
dans lequel ladite extrémité de jonction (4A) de ladite première partie (2A) comprend un tenon (8) s'étendant dans une direction axiale, coaxiale avec ledit axe de rotation (7), ledit tenon (8) comprenant au moins une ailette de retenue (9) s'étendant latéralement par rapport à ladite direction axiale ;
et ladite extrémité de jonction (4B) de ladite seconde partie (2B) comprend une ouverture (10) et une surface de retenue (11) coopérant avec ladite ailette de retenue (9), ladite ouverture (10) étant formée de sorte que :
lorsque lesdites première et seconde parties (2A, 2B) sont dans ladite position alignée, ladite ouverture (10) permet le passage dudit tenon (8) avec ladite ailette de retenue (9) lorsque ladite première partie (2A) est déplacée vers ladite seconde partie (2B) dans ladite direction axiale ;
et entre ladite position alignée et ladite position angulaire, lorsque lesdites première et seconde parties (2A, 2B) ne sont pas dans ladite position alignée, lesdites extrémités de jonction (4A, 4B) sont en appui l'une contre l'autre, empêchant le mouvement relatif entre lesdites première et seconde parties (2A, 2B) dans ladite direction axiale dans une direction, alors qu'en même temps, ladite ailette de retenue (9) est en appui contre ladite surface de retenue (11) empêchant ledit mouvement relatif dans une direction opposée, de sorte que lesdites deux parties (2A, 2B) ne peuvent pas être séparées.

2. Dispositif (1) selon la revendication 1, **caractérisé en ce que** ladite extrémité de jonction (4A) de ladite première partie (2A) a une cavité circulaire (12) à partir du centre de laquelle ledit tenon (8) s'étend, et ladite extrémité de jonction (4B) de ladite seconde partie (2B) a une saillie circulaire (13) dans laquelle ladite ouverture (10) est formée, ladite saillie circulaire (13) étant formée de sorte qu'elle s'ajuste dans ladite cavité circulaire (12) lorsque lesdites première et seconde parties (2A, 2B) sont fixées entre elles.

3. Dispositif (1) selon l'une quelconque des revendications 1 ou 2, **caractérisé en ce que** ledit tenon (8) comprend au moins deux desdites ailettes de retenue (9) .

4. Dispositif selon la revendication 3, **caractérisé en ce que** lesdites au moins deux ailettes de retenue (9) sont agencées à l'opposé l'une de l'autre par rapport audit axe de rotation (7).

5. Dispositif (1) selon l'une quelconque des revendications 1 à 4, **caractérisé en ce que** l'une parmi ladite extrémité de jonction (4A) de ladite première partie (2A) et ladite extrémité de jonction (4B) de ladite seconde partie (2B) comprend des trous (16) agencés dans différentes positions angulaires autour dudit axe de rotation (7), et l'autre comprend une cheville (17) agencée de sorte qu'elle est introduite dans chacun desdits trous (16) pour différentes valeurs de l'angle formé par lesdits axes longitudinaux (6A, 6B).

6. Dispositif (1) selon l'une quelconque des revendications 1 à 5, **caractérisé en ce que** l'une parmi ladite extrémité de jonction (4A) de ladite première partie (2A) et ladite extrémité de jonction (4B) de ladite seconde partie (2B) comprend des marques angulaires (25) autour dudit axe de rotation (7), et l'autre comprend une marque de référence (26) agencée en face desdites marques angulaires (25).

7. Dispositif (1) selon l'une quelconque des revendications 1 à 6, **caractérisé en ce que** ledit tenon (8) comprend une partie élastiquement flexible dans laquelle ladite ailette de retenue (9) est agencée, ladite partie élastiquement flexible étant dimensionnée de sorte que dans ladite position alignée, ledit tenon (8) avec ladite ailette de retenue (9) traverse uniquement ladite ouverture (10) lorsque ladite partie élastiquement flexible est courbée.

8. Dispositif (1) selon la revendication 7, **caractérisé en ce que** ladite partie élastiquement déformable est formée par deux bras en vis-à-vis (24) formant une fourche, chacun desdits deux bras (24) comprenant l'une desdites ailettes de retenue (9) et étant élastiquement flexibles pour se rapprocher l'un de l'autre et pour permettre au dit tenon (8) avec les deux ailettes de retenue (9) de traverser ladite ouverture (10) .

9. Dispositif (1) selon la revendication 8, **caractérisé en ce que** lesdites deux ailettes de retenue (9) ont une extrémité biseautée (19).

10. Dispositif (1) selon l'une quelconque des revendications 1 à 9, **caractérisé en ce que** chacune desdites extrémités d'ajustement (3A, 3B) desdites première et seconde parties (2A, 2B) comprend deux ailes (21A, 21B) s'étendant à partir d'une face de ladite partie planaire (5A, 5B), respectivement le long de chacun des deux côtés longitudinaux de ladite partie planaire (5A, 5B), et au moins l'une desdites deux ailes (21A, 21B) est munie d'un trou allongé (22A, 22B) s'étendant dans la direction dudit axe longitudinal (6A, 6B).

11. Dispositif (1) selon l'une quelconque des revendications 1 à 8, **caractérisé en ce que** chacune desdites extrémités d'ajustement (3A, 3B) est constitué de ladite partie planaire (5A, 5B) qui est dépourvue d'ailes, et ladite partie planaire (5A, 5B) est prévue avec un trou allongé (23A, 23B) s'étendant dans la direction dudit axe longitudinal (6A, 6B).
